# EUROPEAN PATENT SPECIFICATION

(11) **EP 0 420 824 B1**
(45) Date of publication and mention of the grant of the patent: **05.01.1994**
(21) Application number: 90830404.1
(22) Date of filing: 18.09.1990
(51) Int. Cl.: A47C 7/46

(54) **A backrest for a seat, particularly a motor-vehicle seat**
Eine Rückenlehne für einen Sitz, insbesondere einen Kraftfahrzeugsitz
Un dossier pour un siège, notamment un siège de véhicule automobile

(30) Priority: 28.09.1989 IT 6781589; 11.04.1990 IT 6727090
(43) Date of publication of application: 03.04.1991
(73) Proprietor: FIAT AUTO S.p.A., 10135 Torino (IT)
(72) Inventor: Acuto, Giovanni, I-10043 Orbassano (Torino) (IT); Dal Monte, Antonio, I-00187 Roma (IT)
(74) Representative: Bosotti, Luciano

(56) References cited:
- EP-A- 0 109 572
- EP-A- 0 312 506
- EP-A- 0 322 535
- EP-A- 0 328 137

## Description

The present invention relates to backrests for seats and has been developed with particular attention to its possible use in the field of motor-car seats.

Specifically, the present invention relates to a backrest having the characteristics set forth in the preamble of Claim 1. Such a backrest is known, e.g. from EP-A-0 312 506.

The object of the present invention is to provide a backrest which can provide lumbar support over a wide, wrap-around surface area and with the added possibility that the transverse restraint provided by the backrest can adapt automatically to fit different human frames.

According to the present invention, this object is achieved by means of a backrest having the further characteristics indicated in the characterising portion of Claim 1. Particular embodiments of the invention are defined in dependent Claims 2 to 24

In general, the use of a lumbar support with very high side portions for achieving effective transverse restraint in a seat such as a motor-car seat complies with precise information regarding functional anatomy.

Transverse restraint of the trunk by means of a force exerted at a high level, that is at the level of the shoulders or armpits, is not satisfactory for body structures which do not fit wrap-around systems in this position. Due to the shape of the back and because of the movements which the upper limbs must be able to perform freely, the body structure cannot tolerate restraint elements which tend to obstruct lateral movements of the upper part of the trunk at the level of the shoulder-blades. A restraint for the lower portion of the back, level with the pelvis and the buttocks, is equally difficult to achieve and to tolerate.

As well as being difficult to adapt to various sizes, such a device would be quite useless from the point of view of dynamic effectiveness, since it would act too low down where transverse support is already offered by the squab.

The present invention therefore proposes the use of a butterfly- (or hourglass-) shaped lumbar support, that is a support whose central portion is not very deep but whose side wings are much deeper.

The object of the invention is achieved even better by the use of a lumbar support system which can articulate spontaneously as a result of the pressure exerted by the backs of the various users of the seat whose backs have widely differing radii of curvature.

It is also possible to achieve a very favourable effect from the point of view of comfort through a particular design of the parts of the lumbar support and of its padding but, above all, this design is very cheap so that it can even be used in the cheaper ranges of vehicles.

The invention will now be described, purely by way of non-limiting example with reference to the appended drawings, in which:

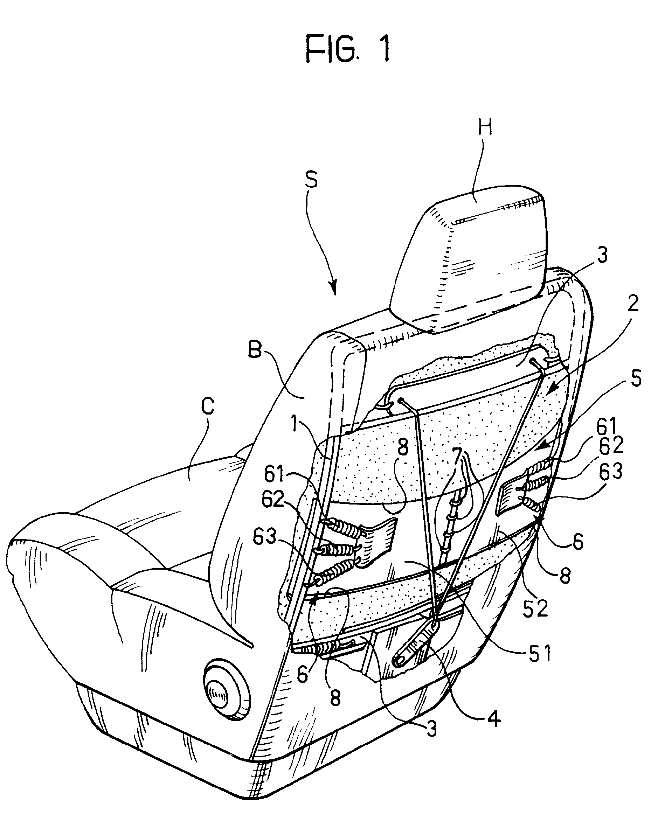

Figure 1 is a perspective view from behind of a backrest for motor-car seat produced according to the invention with some parts removed and/or cut away for clarity of illustration,
Figures 2 to 7 are schematic examples of rear elevational views (Figs. 2, 4 and 6) and plan views (Figures 3, 5 and 7) of some possible situations of use of a seat according to the invention,
Figures 8 and 10 show hypothetical rear elevational views of some possible situations of use of a variant of a seat according to the invention,
Figures 11 to 13 are hypothetical plan views of the configurations assumed by the seat in the situations of use of Figures 8 to 10, respectively,
Figure 14 is a further hypothetical rear elevational view of a first variant of a seat according to the invention,
Figure 15 shows a possible variant of the invention from approximately the same viewpoint as that of Figure 14,
Figure 16 shows a further embodiment of the invention, also from a viewpoint more or less the same as that of Figures 14 and 15,
Figure 17 is a view which corresponds approximately to the viewpoint indicated by the arrow XVII in Figure 16,
Figure 18 and Figure 19 show a further variant of the invention from a viewpoint more or less the same as that of Figures 14 to 16 and 11 to 13 respectively,
Figures 20 to 22 show two possible operating conditions of another possible embodiment of the seat of Figure 18: in particular, Figure 22 is a side view corresponding approximately to the viewpoint indicated by the arrow XXII of Figure 18,
Figure 23 shows yet another possible variant of the seat according to the invention, further characteristics of which can be seen from Figure 24 to 26.

In the drawing, a motor-car seat is generally indicated S and includes a salt or, in short, a "squab" C, a backrest B upstanding from its rear region, and a headrest element H at the top of the backrest.

According to a widely known solution, the backrest B is constituted essentially by three elements, that is:
- a frame 1, usually of tubular metal, constituting the rigid framework of the backrest; the frame 1 is intended to be connected at its lower end (by known means not shown) to the squab C so as to be adjustable by pivoting forwards and backwards and is also provided with support members for the headrest H which enable the height of the latter to be adjusted selectively,
- a mass of padding 2 of spongy material (for example soft polyurethane foam), which covers the outside of the frame 1 and in turn has an outer covering of fabric, leather, artificial leather or the like, and
- a spring structure interposed between the frame 1 and the padding 2 in order to support the mass of padding 2 on the frame 1 in a resiliently yielding manner.

According to a solution which is also known in the art (see for example European Patent Application EP-A- 0 312 506 in the name of the same Applicant), one or more movable cross members 3 may be interposed between the frame 1 and the mass of padding 2, their positions being variable selectively by the operation of a control device 4 in order selectively to modify the vertical profile of the backrest B to achieve a better fit against the back of the seat occupant.

The main characteristic of the backrest according to the invention is the presence of a strip support member or band element 5 of generally arcuate shape with its concavity facing towards the front face of the backrest, the support member being arranged transverse the frame 1 in a position such as to support the lumbar region of the back of the seat occupant.

This expression is intended to indicate the fact that the member 5 is located approximately in the middle (slightly below the middle) of the vertical extent of the backrest B. The position is thus such that the member 5 is located at approximately the same height as the lumbar region of the back of the seat occupant.

Moreover, the member 5 is butterfly- (or hourglass-) shaped in the sense that it includes a central portion which is not very deep but the depth gradually increases towards its ends 6 which face the sides of the frame 1.

Each of the ends 6 of the member 5 is supported resiliently on the frame 1, for example by means of a set of springs 61 to 63. For example, the supporting set may include a central spring 62 arranged horizontally and a pair of inner springs 61, 62 one oriented upwardly and the other downwardly in a generally V-shaped arrangement which converges towards the point of attachment of the central spring 62 to the member 5, usually in correspondence with a bracket projecting from the rear surface thereof.

The three springs 61 to 63, whose opposite ends from the element 5 are fixed to the frame 1 (more precisely to one of the two vertical tubular uprights of the frame), therefore act along a substantially horizontal resultant which is coextensive with the main axis of the member 5.

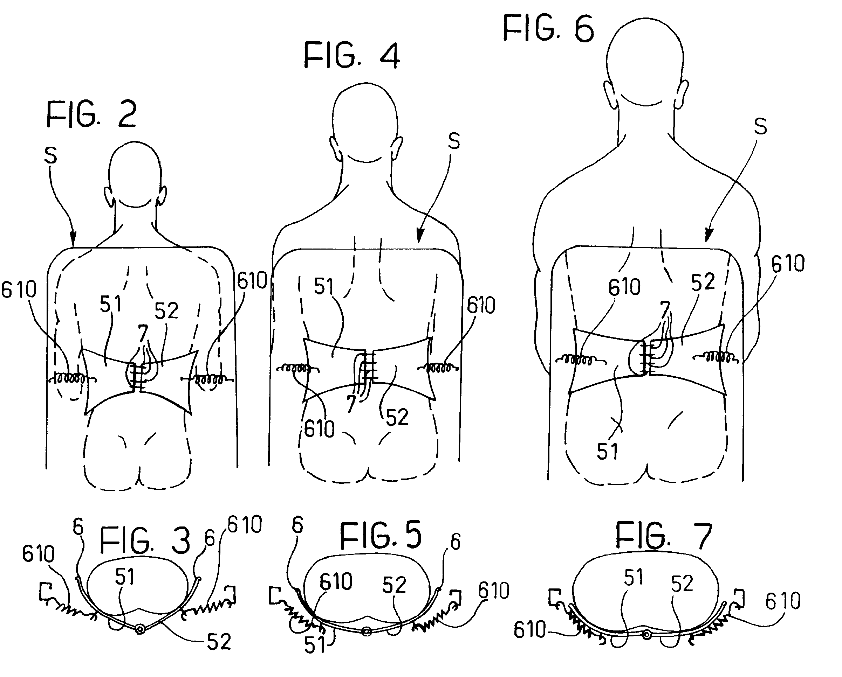

The use of a support system of the type described should not, however, be considered essential for the realisation of the invention. In particular, in order to simplify the general structure of the seat, a single spring 61 may be used for each end of the member 5 (Figures 2 to 7).

The lumbar support member 5 is preferably constituted by two symmetrical parts 51, 52 connected by hinge bodies 7 aligned along a central vertical axis extending in the central vertical plane of the seat.

This means that, when stressed by the pressure exerted by the back of the seat occupant the two parts 51, 52 tend to bend about the axis of the hinge 7 so that the member 5 (and the portion of padding 2 superposed thereon - and therefore the backrest B as a whole) adapt very precisely to the anthropometric characteristics of the seat occupant.

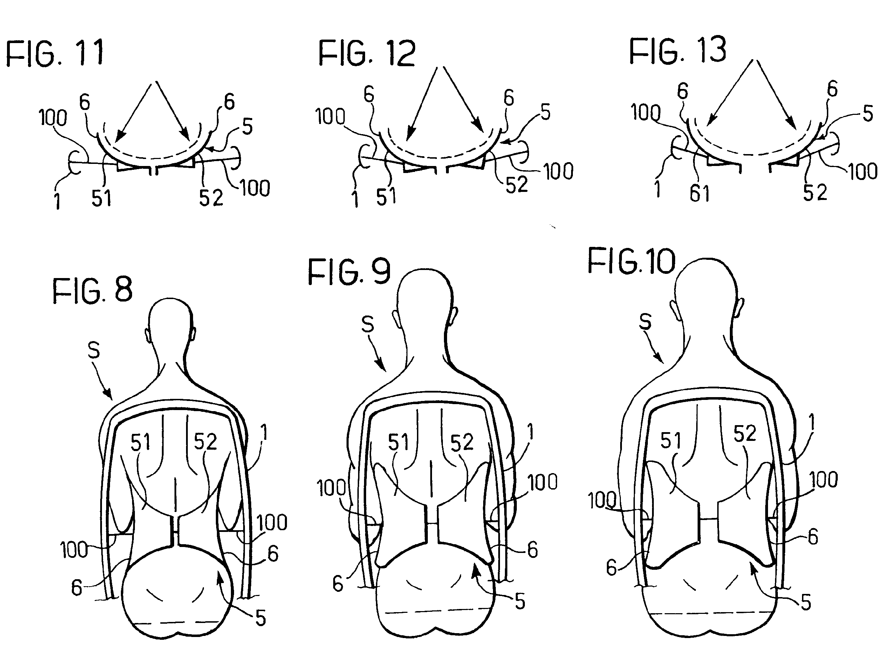

This is illustrated in Figures 2 to 7 which show schematically the positions assumed by the two parts 51 and 52 of the member 5 when the seat S is occupied by a small person (Figures 2 and 3), and average-sized person (Figure 4 and 5), and a person with large corporal dimensions (Figures 6 and 7), respectively.

It can be noted that the centre of the butterfly-shaped lumbar support 5 assumes different angles according to the different corporal dimensions.

By virtue of the member 5, which may even be the only support member in the backrest, it is therefore possible to offer the seat occupant adequate lumbar support, and thus an excellent degree of comfort, ensuring very good overall vertical restraint of the back against the lateral forces which arise during movements of the vehicle as a results of transverse accelerations (for example on bends).

This is achieved by a simple backrest structure which lends itself very well to automated assembly.

The lumbar support member 5 is preferably made of intrinsically rigid material in the sense that, unlike the springs used in the spring structures of seats currently produced, this element (or its component parts) cannot deform resiliently to any appreciable extent. For this purpose, the parts 51, 52 may be pressed from sheet metal or moulded from rigid plastics material.

The padding mass 2 preferably has two recesses (grooves) 8, which are also symmetrical, in its rear face which will be turned towards that member 5 for facilitating the insertion of the member 5 in its assembled position and its retention in that position during normal use.

In the variant of Figures 8 to 11 each end 6 of the strip member of band element is supported on the frame 1 by two substantially-inextensible elements shown in most of the drawings in the form of two pieces of iron rod or wire 100.

This means that the spacing of the ends 6 of the element 5 from the lateral uprights of the frame 1 is substantially fixed. Each of the two symmetrical parts 51, 52 constituting the element 5, however, can pivot generally about an approximately vertical axis or locus of an axis corresponding to the axis of the respective vertical arm of the frame 1 to which the part is connected.

This pivoting movement obviously involves a variation in the distance between the facing inner ends of the parts 51, 52. These can thus move relative to each other, correspondingly changing the profile of the element 5 (and of the portion of padding superposed thereon - and hence of the backrest as a whole) so that it becomes adapted precisely to the anthropometric characteristics of the seat occupant.

This is illustrated in Figures 8 to 13 which show schematically the positions assumed by the two parts 51 and 52 of the element 5 when the seat S is occupied by a small person (Figures 8 and 11), an average-sized person (Figures 9 and 12), and a large person (Figures 10 and 13) respectively.

It can be seen that the butterfly-shaped lumbar support 5 assumes different profiles in different conditions in dependence on the size of the seat occupant.

By virtue of the element 5, which may even be the only support element present in the backrest, it is thus possible to afford the seat occupant adequate lumbar support and therefore an excellent degree of comfort, ensuring very good overall vertical restraint of the back against the lateral forces which arise during movements of the vehicle resulting from transverse accelerations (for example, on bends).

As already indicated, the lumbar support element 5 is preferably made of a material which is intrinsically rigid in the sense that, unlike the springs used in the spring structures of seats currently produced, the parts 51, 52 are made of a rigid material such as pressed sheet metal or rigid moulded resilient material.

Various structural solutions may be used for the connection of the two parts 51, 52.

In general, it is necessary to arrange for the parts 51 and 52 to be hinged to each other so that they can bend as a whole under the pressure of the back of the seat occupant S, whilst their facing inner ends simultaneously move apart of together as a result of the pressure exerted by the occupant leaning on the backrest. In this way, the element 5 can open out if the seat occupant has a wide back or, on the other hand, can close up if the occupant has a small waist.

In other words, the element 5 as a whole must have a dual capacity for movement or profile adjustment, represented by the greater or lesser concavity of the profile defined jointly by the two parts 51, 52 (relative inclination) and by their greater or lesser separation (relative spacing) in order better to accommodate wide or narrow backs.

To this capacity for movement may advantageously be added a capacity to perform a rocking movement about a horizontal axis so that the element 5 can adapt itself to vertebral columns with lumbar curves which are high up or low down.

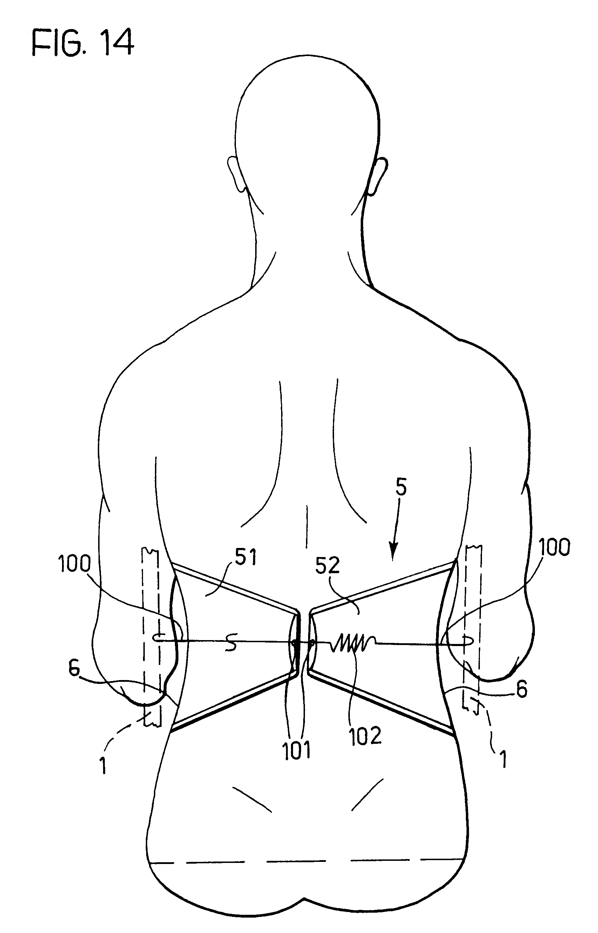

This result can be achieved according to various functional solutions to which Figures 14 to 22 relate.

For example, in the solution according to Figure 14, which is structurally very simple, this result is achieved by virtue of the fact that the two pieces of wire or rod 100 which support the parts 51, 52 are interconnected and pass through respective guide apertures 101 in the two parts 51, 52 so as to form a single tie which supports the element 5 on the frame 100. This tie is made longitudinally extensible by the presence of a spring 102 mounted within one of the two parts 51, 52 (preferably on the opposite side from the padding).

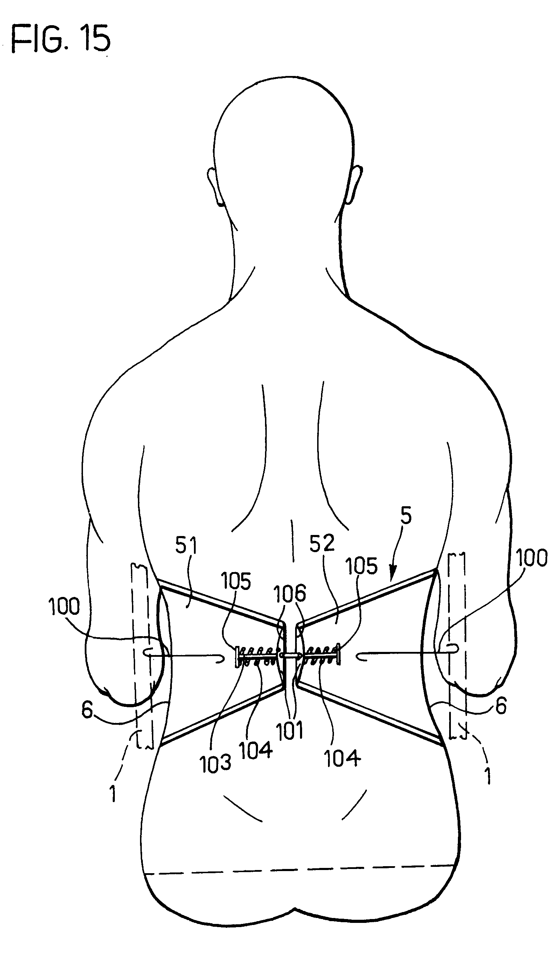

The variant of Figure 15 is substantially similar to the solution just described.

In this case, the two wires or rods 100 are not interconnected. A tie rod 103 with two associated springs 104 extends between the two parts 51, 52, however, again through apertures 101. Each of the springs 104 acts under compression between an enlarged end 105 of the tie rod 103 and a corresponding return or flange 106 of the respective part 51, 52, in which the aperture 101 is provided.

Naturally, the springs 102, 104 may, to advantage, be replaced by other functionally equivalent elements, for example, a rubber ring 107 which connects the two inner ends of the parts 51, 52 resiliently according to the solution which will be referred to more explicitly below.

The solutions of Figures 14 and 15 enable the profile of the backrest to be adjusted automatically, that is, as a result solely of the pressure exerted on the backrest by the seat occupant's back, by the following movements:
- a movement apart of the parts 51, 52,
- an increase or reduction in the concavity between the two parts 51, 52 in question,
- a pivoting of the element 5 as a whole about the horizontal axis defined by the rods 101, so as to perform a rocking movement which tends to adjust the backrest for persons with lumbar curves which are higher up or lower down.

If - as is quite frequently the case - a person has a lateral curvature of the spine, this orientation could be asymmetrical.

In this case, good posterior and lateral restraint can be achieved even for individuals having a certain asymmetrical deformation of the pelvis, twisted lumbar and sacral regions of the spine, and similar deformities.

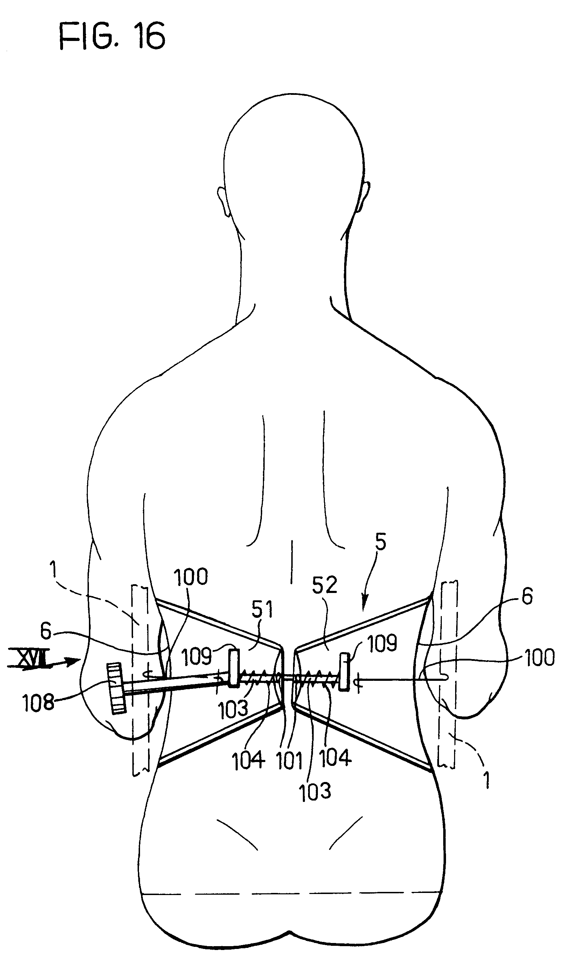

A further development of the invention, to which Figures 16 to 22 relate specifically, provides for the use of a positive adjustment system for the element 5. In practice, this is a kinematic mechanism which can move the two parts 51 and 52 away from and towards each other so as to achieve the best adjustment for backs of different widths.

In the solution of Figure 16, the tie rod 103 on which the springs 104 are fitted assumes the character of an actual shaft which can be rotated about its principle axis (which extends horizontally, transverse the seat S). This is achieved by the positive operation of a knob 108 projecting from one side of the seat S. Naturally, this manual operation may be replaced by automatic operation, for example, with the provision of an electric motor which can rotate the tie rod-shaft 103.

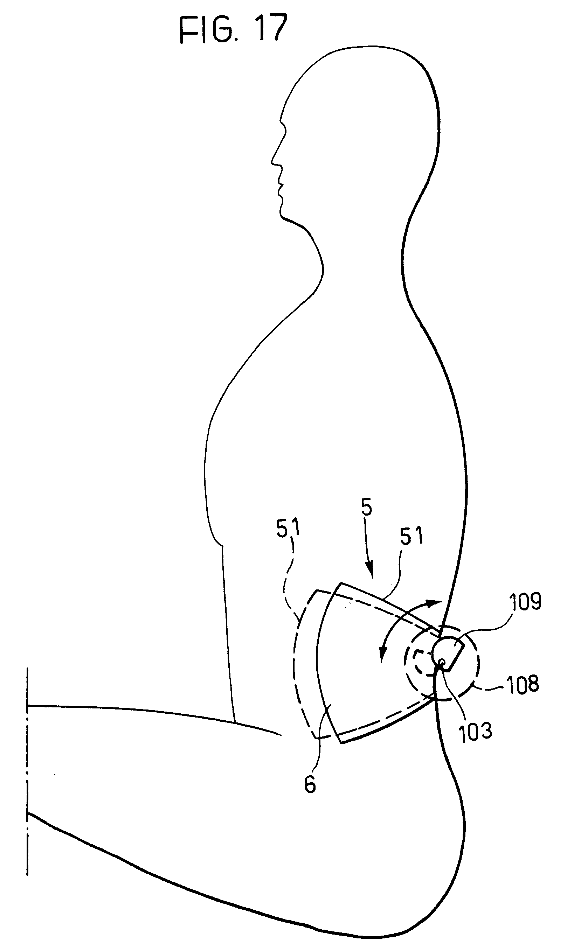

No matter which solution is adopted for the operation of the shaft, two cams or similar eccentric bodies 109 may be mounted on its ends and, as a result of the rotation of the shaft 103 (see in particular the side view of Figure 17), these urge the parts 51, 52 forwards by a distance which can be adjusted selectively by means of the knob 108.

A more advanced position thus assumed by the plates 51 and 52 is shown schematically in broken outline in Figure 17.

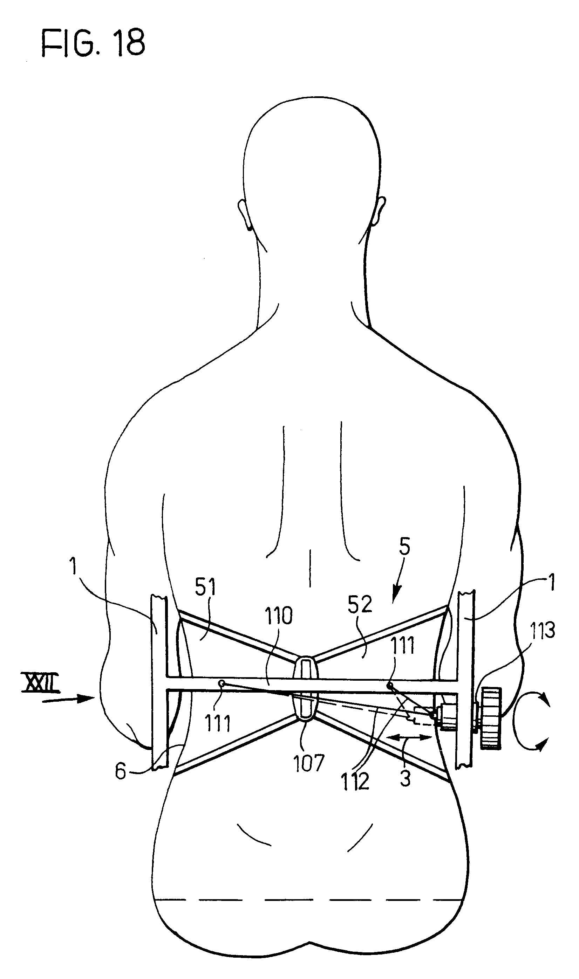

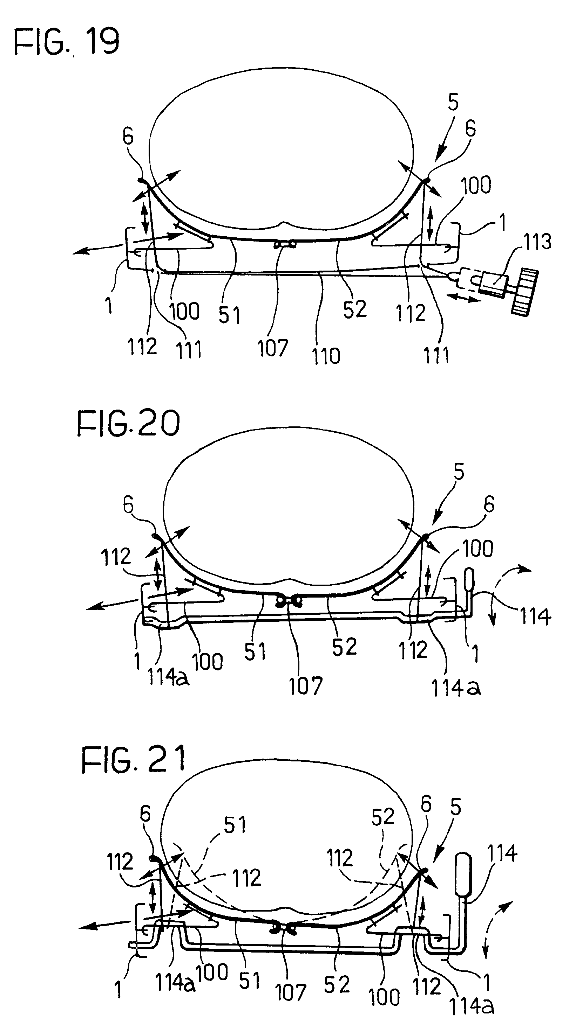

In the further solution of Figures 18 and 19, the two lateral uprights of the frame 1 are connected by a horizontal cross member 110 which extends between them like a bridge.

Holes 111 through which ties 112 pass are provided in the cross member 110. The ties 112 act as traction cables acting between the cross member 110 (which is substantially rigid) and the parts 51, 52 so as to modify their orientation positively.

The ties 112 can be operated selectively by a biasing system (of known type) controlled by a knob 113 (Figures 18 and 19).

The tension exerted on the ties 112 causes the parts 51 and 52 to open out so as gradually to widen the profile of the backrest. In practice, when the wires 112 are pulled, the parts 51, 52 open out so as to reduce the transverse restraint of the seat.

In this embodiment, the support rods or wires 100 may, to advantage, assume the profiles of L-shaped springs in order to fulfil the dual role of supporting the element 5 and biasing the parts 51, 52 together.

Thus, when the ties 112 are released or loosened, the rods 100 tend automatically to return the parts 51, 52 to their closed position (Figure 11).

The foregoing is also substantially true of the embodiments of Figures 13 to 15, in which the ties 112 are tensioned by a pivoting lever 114 which rotates a horizontal shaft with two gooseneck parts 114a to which the ties are connected. In this solution, the cross member 110 can also be eliminated since the gooseneck parts 113 can be arranged directly behind the points at which the ties 112 are connected to the parts 51, 52, without the need for the biasing action of the holes 111 in the cross member 110 of the embodiment of Figures 11 and 12.

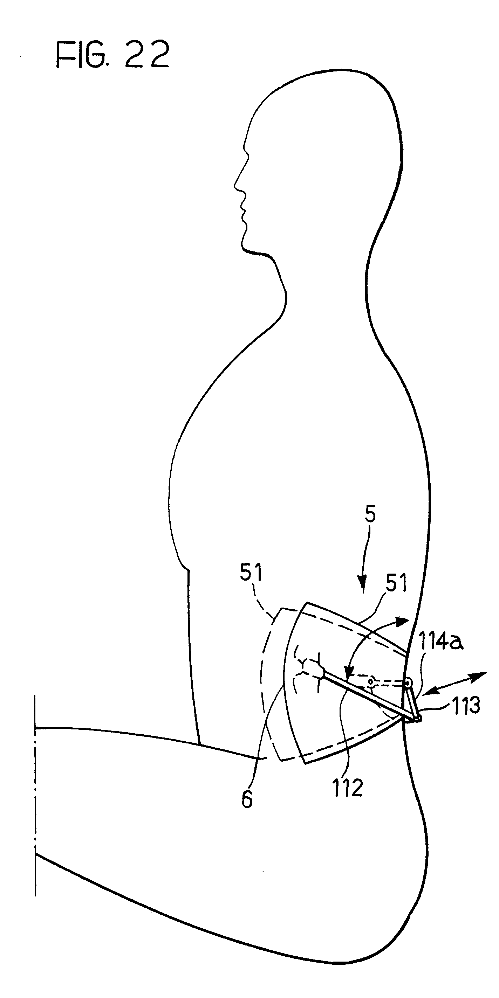

In Figures 21 and 22, the orientation assumed by the parts 51 and 52 in their advanced, closed position is also shown schematically in broken outline.

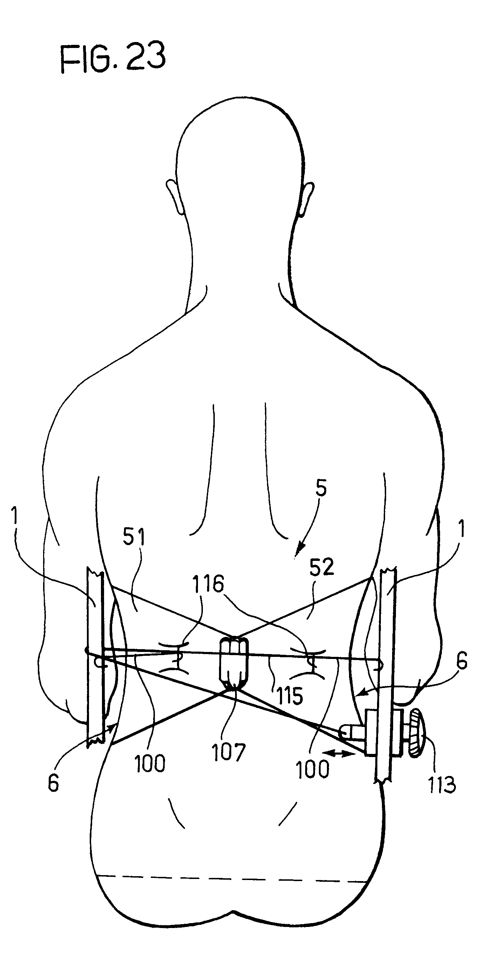

The embodiment of Figures 23 to 26 provides for the use of an operating system which combines elements of an alternative solution with some of the aspects described above.

In particular, this further variant aims to simplify the mechanism for moving the band-like lumbar support 5.

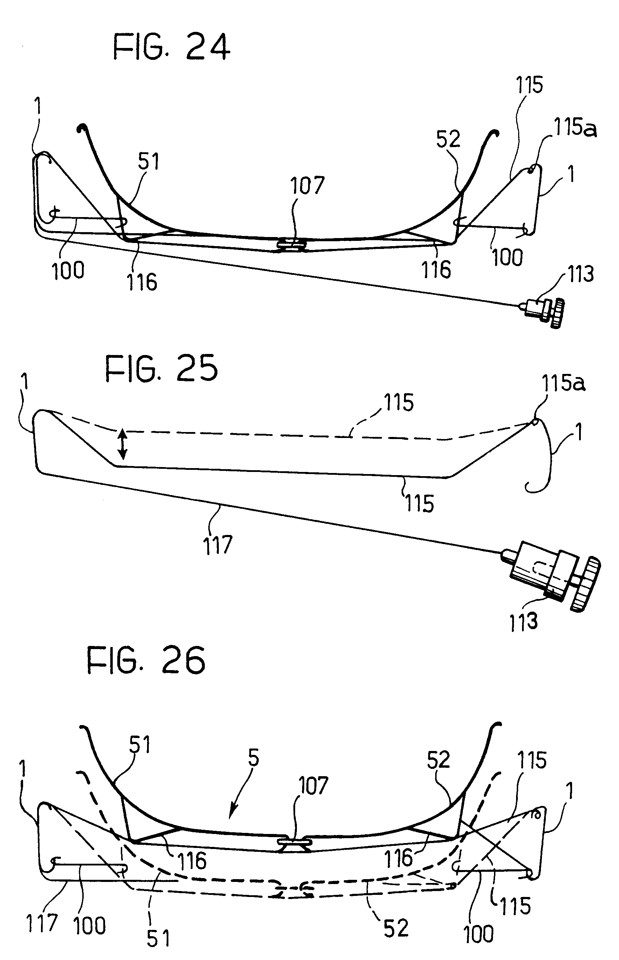

In summary, it is based on the use of a single tie 115 whose path is shown more clearly in Figure 25. Briefly, the tie 115 is anchored at a first end 115a to a fixed point on one of the vertical uprights of the frame 1 (for example, the upright on the right-hand side of the seat with reference to Figures 23 to 26), extends generally around the back of the parts 51, 52, for example, through guide formations 116 (which may also be present in the other embodiments), projecting from the rear faces of the parts 51, 52, to form a loop around the opposite upright 1, and its remaining pass 117 then returns towards the tensioning element 113.

In practice, when the tie 115 is pulled by the tensioner 113, its front pass tends to move the band element 5 forwards (the situation illustrated in continuous outline in Figure 26). When it is released to a greater or lesser extent, however, the front pass tends to slacken correspondingly, facilitating the backward movement of the band element 5 (the situation illustrated in broken outline in Figure 26).

This arrangement leaves the pivot located centrally between the parts 51, 52 (constituted in the embodiment illustrated by the resilient ring 107) completely free so that the element 5 retains its capacity for adjusting itself to the back of the seat occupant.

## Claims

1. A backrest (B) for supporting the back of the occupant of a seat (S), comprising a frame (1), a mass of padding (2) fitted to the frame and a spring structure (3 to 5) for supporting the padding mass (2) on the frame (1) in a resiliently yielding manner, the spring structure comprising a strip-member (5) arranged in such a position as to provide lumbar support for the back of the occupant of the seat (S), characterised in that
- the strip member (5) is generally butterfly-shaped with a central portion and two opposite ends (6), its height increasing from the central portion towards the ends, and
- the strip member (5) comprises two parts (51, 52) hinged to each other (7) along a hinge axis which extends substantially in the central vertical plane of the backrest (B), whereby they can conform as a whole to the back of the occupant of the seat (S) so as to achieve a fit of the lumbar support member (5).

2. A backrest according to Claim 1 characterised in that the strip member (5) is supported resiliently (61 to 63) on the frame (1).

3. A backrest according to Claim 2, characterised in that the strip member (5) is generally elongate and extends between two opposite ends along a principal axis transverse the frame (1) and in that spring support means (61 to 63) are interposed between each of the ends and the frame (1).

4. A backrest according to any one of Claims 1 to 3, characterised in that the mass of padding (2) has recesses (8) for housing the strip member (5).

5. A backrest according to claim 1, characterised in that the strip member (5) is constituted by at least two parts (51, 52) which are mounted on the frame (1) by respective support means (100) and can pivot relative to the frame (1) so that the overall profile of the strip member (5) can be varied in order to adjust the lumbar support member (5), and in that means (102, 104; 107; 109; 112, 115) are provided for varying the distance between the two parts (51, 52) at their facing inner ends.

6. A backrest according to Claim 5, characterised in that the strip member (5) is generally butterfly-shaped with a central portion and two outer ends (6) which increase in depth from the central portion towards to the ends.

7. A backrest according to any one of the preceding claims, characterised in that the parts (51, 52) of the strip member (5) are made of a substantially rigid material.

8. A backrest according to any one of Claims 5 or 6, characterised in that the respective support means (100) can allow the strip member (5) to effect a general rocking movement about a horizontal axis in order for the strip member (5) to adjust itself to the vertical curvature of the seat occupant's back.

9. A backrest according to Claim 5, characterised in that the parts (51, 52) of the strip member (5) are connected to the frame (1) by means of substantially inextensible support elements (100).

10. A backrest according to Claim 5 or Claim 9, characterised in that the respective support means (100) are generally filament-like and extend substantially horizontally.

11. A backrest according to any one of the Claims 5 to 10, characterised in that the two parts (51, 52) of the strip member (5) are interconnected at their facing inner ends with the interposition of resiliently extensible elements (102, 107).

12. A backrest according to Claim 10, characterised in characterised in that the generally filament-like support means (100) are interconnected so as to form a single tie for supporting the strip member (5) with the interposition of at least one spring (102) for enabling the distance between the two parts (51, 52) to be varied.

13. A backrest according to Claim 5, characterised in that the two parts (51, 52) of the strip member (5) are interconnected at their facing inner ends by a tie element (103) whose opposite ends (105) each face a respective part (51) and in that resilient means (104) are interposed between each of the opposite ends (105) of the tie element (103) and the respective part (51, 52).

14. A backrest according to Claim 13, characterised in characterised in that the resilient means (104) operate under compression.

15. A backrest according to Claim 11, characterised in that the two parts (51, 52) are interconnected at their facing inner ends by a resilient annular element (107).

16. A backrest according to Claim 5, charcterised in that it includes adjustment means (108 to 114) for positively varying the relative inclination and/orthe relative spacing of the two parts (51, 52) of the strip member (5) selectively.

17. A backrest according to Claim 16, characterised in that the adjustment means comprise eccentric means (109) which cooperate with the two parts (51, 52) and can be rotated selectively (108).

18. A backrest according to Claim 13 and Claim 17, characterised in that the eccentric means (108) are keyed to the tie element (103), and in that means (108) are provided for selectively rotating the tie element (103).

19. A backrest according to Claim 16, characterised in that it includes traction elements (111 to 117) acting between the frame (1) and the parts (51, 52) of the strip member (5).

20. A backrest according to Claim 19, characterised in that it includes separate traction elements (112) for each of the at least two parts (51, 52) of the strip member (5).

21. A backrest according to Claim 19 or Claim 20, characterised in that the traction elements are operated by a rotatable shaft (114) with gooseneck parts (114a).

22. A backrest according to any one of claims 19 to 21, characterised in that the frame (1) includes a structural element (110) with holes (111) through which the traction elements (112) pass.

23. A backrest according to Claim 19, characterised in that it includes a single traction element (115) with a pass extending around the band element (5).

24. A backrest according to Claim 1 or Claim 5, characterised in that the respective support means (100 - Figure 19 to 21) are formed as resilient elements for biasing the two parts (51, 52) to a relative position in which they are closed and close together.

## Patentansprüche

1. Rückenlehne (B) zum Stützen des Rückens des auf einem Sitz (S) Sitzenden, umfassend einen Rahmen (1), eine auf den Rahmen aufgelegte Polstermasse (2) und eine Federstruktur (3 bis 5) zum elastisch nachgebenden Abstützen der Polstermasse (2) am Rahmen (1), wobei die Federstruktur ein streifenförmiges Teil (5) umfaßt, welches in einer solchen Position angeordnet ist, daß es eine Lendenabstützung für den Rücken des auf dem Sitz (S) Sitzenden bietet, dadurch **gekennzeichnet**, daß
- das streifenförmige Teil (5) allgemein schmetterlingsförmig ausgebildet ist mit einem mittleren Abschnitt und zwei einander abgewandten Enden (6), wobei seine Höhe vom mittleren Abschnitt zu den Enden hin zunimmt, und
- das streifenförmige Teil (5) zwei Teile (51, 52) umfaßt, die miteinander scharnierartig (7) entlang einer Scharnierachse verbunden sind, die sich im wesentlichen in der zentralen vertikalen Ebene der Rückenlehne (B) erstreckt, wodurch diese sich als Ganzes an den Rücken des auf dem Sitz (S) Sitzenden so anlegen können, daß ein Paßsitz des Lendenstützteils (5) erreicht wird.

2. Rückenlehne nach Anspruch 1, dadurch **gekennzeichnet**, daß das streifenförmige Teil (5) elastisch (61 bis 63) am Rahmen (1) gehalten wird.

3. Rückenlehne nach Anspruch 2, dadurch **gekennzeichnet**, daß das streifenförmige Teil (5) allgemein länglich ausgebildet ist und sich zwischen zwei einander abgewandten Enden entlang einer Hauptachse erstreckt, die quer zum Rahmen (1) liegt, und daß federnde Haltemittel (61 bis 63) zwischen jedem der Enden und dem Rahmen (1) angeordnet sind.

4. Rückenlehne nach einem der Ansprüche 1 bis 3, dadurch **gekennzeichnet**, daß die Polstermasse (2) Ausnehmungen (8) für die Aufnahme des streifenförmigen Teils (5) hat.

5. Rückenlehne nach Anspruch 1, dadurch **gekennzeichnet**, daß das streifenförmige Teil (5) aus wenigstens zwei Teilen (51, 52) gebildet ist, die am Rahmen (1) durch zugeordnete Haltemittel (100) befestigt sind und relativ zum Rahmen (1) schwenken können, so daß das Gesamtprofil des streifenförmigen Teils (5) verändert werden kann, um das Lendenstützteil (5) zu justieren, und daß Mittel (102, 104; 107; 109; 112, 115) zum Verändern des Abstandes zwischen den beiden Teilen (51, 52) an ihren einander zugewandten inneren Enden vorgesehen sind.

6. Rückenlehne nach Anspruch 5, dadurch **gekennzeichnet**, daß das streifenförmige Teil (5) ganz allgemein schmetterlingsförmig ausgebildet ist mit einem zentralen Abschnitt und zwei äußeren Enden (6), deren Tiefe sich vom zentralen Abschnitt zu den Enden hin vergrößert.

7. Rückenlehne nach einem der vorangehenden Ansprüche, dadurch **gekennzeichnet**, daß die Teile (51, 52) des streifenförmigen Teils (5) aus einem im wesentlichen starren Material hergestellt sind.

8. Rückenlehne nach einem der Ansprüche 5 oder 6, dadurch **gekennzeichnet**, daß die jeweiligen Haltemittel (100) dem streifenförmigen Teil (5) erlauben, eine allgemeine Schwingbewegung um eine horizontale Achse auszuführen, damit sich das streifenförmige Teil (5) selbst an die vertikale Krümmung des Rückens des Sitzenden anpaßt.

9. Rückenlehne nach Anspruch 5, dadurch **gekennzeichnet**, daß die Teile (51, 52) des streifenförmigen Teils (5) mit dem Rahmen (1) über im wesentlichen nicht dehnbare Halteelemente (100) verbunden sind.

10. Rückenlehne nach Anspruch 5 oder 9, dadurch **gekennzeichnet**, daß die jeweiligen Haltemittel (100) ganz allgemein drahtartig sind und sich im wesentlichen horizontal erstrecken.

11. Rückenlehne nach einem der Ansprüche 5 bis 10, dadurch **gekennzeichnet**, daß die beiden Teile (51, 52) des streifenförmigen Teils (5) an ihren einander zugewandten inneren Enden unter Zwischenschaltung elastisch dehnbarer Elemente (102, 107) miteinander verbunden sind.

12. Rückenlehne nach Anspruch 10, dadurch **gekennzeichnet**, daß die ganz allgemein drahtartigen Haltemittel (100) so miteinander verbunden sind, daß sie ein einziges Verbindungselement zum Halten des streifenförmigen Teils (5) unter Zwischenschaltung von wenigstens einer Feder (102) bilden, um eine Veränderung des Abstandes zwischen den beiden Teilen (51, 52) zu ermöglichen.

13. Rückenlehne nach Anspruch 5, dadurch **gekennzeichnet**, daß die beiden Teile (51, 52) des streifenförmigen Teils (5) an ihren einander zugewandten inneren Enden durch ein Verbindungselement (103) miteinander verbunden sind, dessen einander abgewandte Enden (105) jeweils einem zugeordneten Teil (51) zugewandt sind, und daß elastische Mittel (104) zwischen jedem der einander abgewandten Enden (105) des Verbindungselementes (103) und dem jeweils zugeordneten Teil (51, 52) zwischengeschaltet sind.

14. Rückenlehne nach Anspruch 13, dadurch **gekennzeichnet**, daß die elastischen Mittel (104) unter Kompression arbeiten.

15. Rückenlehne nach Anspruch 11, dadurch **gekennzeichnet**, daß die beiden Teile (51, 52) an ihren einander zugewandten inneren Enden durch ein elastisches Ringelement (107) miteinander verbunden sind.

16. Rückenlehne nach Anspruch 5, dadurch **gekennzeichnet**, daß sie Einstellmittel (108 bis 114) umfaßt, um wahlweise die gegenseitige Neigung und/oder den gegenseitigen Abstand der beiden Teile (51, 52) des streifenförmigen Teils (5) aktiv zu verändern.

17. Rückenlehne nach Anspruch 16, dadurch **gekennzeichnet**, daß die Einstellmittel Exzentermittel (109) umfassen, welche mit den beiden Teilen (51, 52) zusammenwirken und die wahlweise (108) verdrehbar sind.

18. Rückenlehne nach Anspruch 13 und Anspruch 17, dadurch **gekennzeichnet**, daß die Exzentermittel (108) mit dem Verbindungselement (103) verkeilt sind, und daß Mittel (108) vorgesehen sind, um das Verbindungselement (103) wahlweise zu verdrehen.

19. Rückenlehne nach Anspruch 16, dadurch **gekennzeichnet**, daß sie Zugelemente (111 bis 117) umfaßt, die zwischen dem Rahmen (1) und den Teilen (51, 52) des streifenförmigen Teils (5) wirken.

20. Rückenlehne nach Anspruch 19, dadurch **gekennzeichnet**, daß sie getrennte Zugelemente (112) für jedes der zumindest zwei Teile (51, 52) des streifenförmigen Teils (5) umfaßt.

21. Rückenlehne nach Anspruch 19 oder Anspruch 20, dadurch **gekennzeichnet**, daß die Zugelemente durch eine verdrehbare Welle (114) mit Schwanenhalsabschnitten (114a) betätigt werden.

22. Rückenlehne nach einem der Ansprüche 19 bis 21, dadurch **gekennzeichnet**, daß der Rahmen (1) ein Strukturelement (110) umfaßt mit Öffnungen (111), durch die die Zugelemente (112) hindurchtreten.

23. Rückenlehne nach Anspruch 19, dadurch **gekennzeichnet**, daß sie ein einzelnes Zugelement (115) umfaßt mit einem Abschnitt, welcher sich um das Bandelement (5) herum erstreckt.

24. Rückenlehne nach Anspruch 1 oder Anspruch 5, dadurch **gekennzeichnet**, daß die jeweiligen Haltemittel (100 - Fig. 19 bis 21) als elastische Elemente ausgebildet sind, um die beiden Teile (51, 52) in eine gegenseitige Position vorzuspannen, in der sie geschlossen und nahe beieinander sind.

## Revendications

1. Dossier (B) destiné à supporter le dos de l'occupant d'un siège (S) comportant une ossature (1), une masse de rembourrage (2) montée sur l'ossature et une structure à ressort (3 à 5) destinée à supporter la masse de rembourrage (2) sur l'ossature (1) d'une manière élastique, la structure à ressort comportant un élément de bande (5) disposé dans une position procurant un support lombaire pour le dos de l'occupant du siège (S), caractérisé en ce que
- l'élément de bande (5) est d'une forme générale en papillon avec une partie centrale et deux extrémités opposées (6), sa hauteur augmentant depuis la partie centrale jusqu'aux extrémités, et
- l'élément de bande (5) comporte deux parties (51, 52) articulées l'une à l'autre (7) le long d'un axe de charnière qui s'étend sensiblement dans le plan vertical central du dossier (B), de sorte qu'elles peuvent se conformer au dos de l'occupant du siège (S) de façon à obtenir un ajustement de l'élément de support lombaire (5).

2. Dossier selon la revendication 1, caractérisé en ce que l'élément de bande (5) est supporté de manière élastique (61 à 63) sur l'ossature (1).

3. Dossier selon la revendication 2, caractérisé en ce que l'élément de bande (5) est globalement allongé et s'étend entre deux extrémités opposées le long d'un axe principal transversalement à l'ossature (1) et en ce que des moyens de support à ressort (61 à 63) sont interposés entre chacune des extrémités et l'ossature (1).

4. Dossier selon l'une quelconque des revendications 1 à 3, caractérisé en ce que la masse de rembourrage (2) possède des renfoncements (8) destinés à renfermer l'élément de bande (5).

5. Dossier selon la revendication 1, caractérisé en ce que l'élément de bande (5) est constitué par aux moins deux parties (51, 52) qui sont montées sur l'ossature (1) à l'aide de moyens de support respectifs (100) et peuvent pivoter par rapport à l'ossature (1) de telle sorte que le profil global de l'élément de support lombaire (5) peut être modifié de façon à ajuster l'élément de bande (5), et en ce que des moyens (102, 104; 107; 109; 112, 115) sont prévus afin de modifier la distance entre les deux parties (51, 52) au niveaux de leurs extrémités dirigées vers l'intérieur.

6. Dossier selon la revendication 5, caractérisé en ce que l'élément de bande (5) est d'une forme générale en papillon avec une partie centrale et deux extrémités extérieures (6) qui augmentent de profondeur depuis la partie centrale en direction des extrémités.

7. Dossier selon l'une quelconque des revendications précédentes, caractérisé en ce que les parties (51, 52) de l'élément de bande (5) sont réalisées dans une matière sensiblement rigide.

8. Dossier selon l'une quelconque des revendications 5 ou 6, caractérisé en ce que les moyens de support respectifs (100) peuvent permettre à l'élément de bande (5) d'effectuer un mouvement de basculement général autour d'un axe horizontal afin de permettre à l'élément de bande (5) de s'adapter de lui-même à la courbure verticale du dos de l'occupant du siège.

9. Dossier selon la revendication 5, caractérisé en ce que les parties (51, 52) de l'élément de bande (5) sont reliées à l'ossature (1) au moyen d'éléments de support sensiblement non extensibles (100).

10. Dossier selon la revendication 5 ou la revendication 9, caractérisé en ce que les moyens de support respectifs (100) sont en forme de fil et s'étendent sensiblement horizontalement.

11. Dossier selon l'une quelconque des revendications 5 à 10, caractérisé en ce que les deux parties (51, 52) de l'élément de bande (5) sont interconnectées au niveau de leurs extrémités dirigées vers l'intérieur avec l'interposition d'éléments extensibles élastiquement (102, 107).

12. Dossier selon la revendication 10, caractérisé en ce que les moyens de support en forme de fil (100) sont interconnectés afin de former une unique tige destinée à supporter l'élément de bande (5) avec l'interposition d'au moins un ressort (102) afin de permettre à la distance entre les deux parties (51, 52) d'être modifiée.

13. Dossier selon la revendication 5, caractérisé en ce que les deux parties (51, 52) de l'élément de bande (5) sont interconnectées au niveau de leurs extrémités dirigées vers l'intérieur à l'aide d'un élément de barre (103) dont les extrémités opposées (105) font chacune face à une partie respective (51) et en ce que des moyens élastiques (104) sont interposés entre chacune des extrémités opposées (105) de l'élément de barre (103) et la partie respective (51, 52).

14. Dossier selon la revendication 13, caractérisé en ce que les moyens élastiques (104) fonctionnent sous compression.

15. Dossier selon la revendication 11, caractérisé en ce que les deux parties (51, 52) sont interconnectées au niveau de leurs extrémités dirigées vers l'intérieur par un élément annulaire élastique (107).

16. Dossier selon la revendication 5, caractérisé en ce qu'il comprend des moyens de réglage (108 à 114) destinés à modifier de manière positive l'inclinaison relative et/ou l'espacement relatif des deux parties (51, 52) de l'élément de bande (5) de manière sélective.

17. Dossier selon la revendication 16, caractérisé en ce que les moyens de réglage comportent des moyens excentriques (109) qui coopèrent avec les deux parties (51, 52) et peuvent être entraînées en rotation de manière sélective.

18. Dossier selon la revendication 13 et la revendication 17, caractérisé en ce que les moyens excentriques (108) sont clavetés sur l'élément de barre (103) et en ce que les moyens (108) sont prévus pour faire tourner de manière sélective l'élément de barre (103).

19. Dossier selon la revendication 16, caractérisé en ce qu'il comprend des éléments de traction (111 à 117) agissant entre l'ossature (1) et les parties (51, 52) de l'élément de bande (5).

20. Dossier selon la revendication 19, caractérisé en ce qu'il comprend des éléments de traction séparés (112) pour chacune des deux parties (51, 52) de l'élément de bande (5).

21. Dossier selon la revendication 19 ou la revendication 20, caractérisé en ce que les éléments de traction sont actionnés par un arbre rotatif (114) avec des parties en S (114a).

22. Dossier selon l'une quelconque des revendications 19 à 21, caractérisé en ce que l'ossature (1) comprend un élément structurel (110) avec des trous (111) à travers lesquels passent les éléments de traction (112).

23. Dossier selon la revendication 19, caractérisé en ce qu'il comprend un unique élément de traction (115) avec une partie s'étendant autour de l'élément de bande (5).

24. Dossier selon la revendication 1 ou la revendication 5, caractérisé en ce que les moyens de support respectifs (100 - figures 19 à 21) sont réalisés sous la forme d'éléments élastiques destinés à rappeler les deux parties (51, 52) vers une position relative dans laquelle elles sont fermées et proches l'une de l'autre.
